Europäisches Patentamt

**European Patent Office**

Office européen des brevets

(11) Numéro de publication: **0 316 496**
A1

## (12) DEMANDE DE BREVET EUROPEEN

(21) Numéro de dépôt: **87440076.5**

(51) Int. Cl.⁴: **G05D 23/19 , F24D 19/10**

(22) Date de dépôt: **16.11.87**

(43) Date de publication de la demande:
**24.05.89 Bulletin 89/21**

(84) Etats contractants désignés:
**AT BE CH DE ES GB GR IT LI LU NL SE**

(71) Demandeur: **Coussement, Bruno**
**75 rue Jean-Jaurès**
**F-59420 Mouvaux (Nord)(FR)**

(72) Inventeur: **Coussement, Bruno**
**75 rue Jean-Jaurès**
**F-59420 Mouvaux (Nord)(FR)**

(74) Mandataire: **Lepage, Jean-Pierre**
**Cabinet Lepage & Aubertin Innovations et**
**Prestations 23/25, rue Nicolas Leblanc B.P.**
**1069**
**F-59011 Lille Cédex 1 (Nord)(FR)**

(54) **Procédé de régulation de la température d'une installation de chauffage central.**

(57) L'invention est relative à un procédé de régulation de la température d'une installation de chauffage central.

L'installation comprend notamment une chaudière (1), des canalisations (2) pour la distribution en circuit fermé d'un fluide caloporteur à différents points de chauffage (3) tels que radiateurs, convecteurs ou sols chauffants et une pompe de circulation (4) des dits fluides caloporteurs. Selon le procédé de l'invention, on mesure la température du fluide au départ de la chaudière (1), on mesure la température du fluide au retour de la chaudière (1) et on calcule l'écart entre les deux températures précédemment relevées. On compare l'écart de température relevé par rapport à un écart idéal fonction de la température du fluide au départ de la chaudière, ce qui permet de déterminer un écart différentiel. On ajuste le régime de chauffe de la chaudière, c'est-à-dire la température de départ du fluide caloporteur pour réduire l'écart différentiel.

L'invention trouvera tout particulièrement son application chez les chauffagistes.

FIG.1

L'invention est relative à un procédé de régulation de la température d'une installation de chauffage central. Elle trouvera notamment son application chez les chauffagistes.

Le renchérissement des énergies ainsi que les progrès technologiques enregistrés ces dernières années dans le domaine de l'électronique ont profondément modifier les dispositifs d'asservissement en matière de chauffage.

A l'origine, le régime de chauffe de la chaudière était uniquement piloté en fonction de la température de sortie du fluide caloporteur. L'utilisateur fixait une température de consigne et le fonctionnement de la chaudière s'ajustait pour s'aligner sur cette température de consigne. En fonction de la température de consigne, on accélère ou diminue le régime de chauffe de la chaudière pour obtenir en sortie une température déterminée du fluide caloporteur. Ce type de régulation présente l'avantage d'être extrêmement simple mais les inconvénients de ce procédé sont multiples.

Tout d'abord, il ne peut correctement s'appliquer qu'à des chaudières susceptibles de fonctionner avec une marche variable, les modèles fonctionnant en tout ou rien devant être écartés. De plus, sur le plan énergétique, une chaudière fonctionnant à mi-régime présente un mauvais rendement d'où un mauvais impact économique. Toutefois, l'inconvénient majeur de ce type de régulation se situe au niveau du confort étant donné qu'aucun paramètre influençant la température obtenue dans les locaux chauffés n'est pris en considération pour ajuster le régime de chauffe.

Précisément, c'est pour surmonter cet obstacle que l'on utilise une sonde d'ambiance pour piloter la chaudière. La dite sonde d'ambiance doit être placée dans la pièce la plus fréquentée de l'habitation et en fonction d'une température de consigne qui lui est imposée, elle fait fonctionner ou arrête la chaudière selon la température mesurée.

Il s'agit incontestablement d'un progrès qui, toutefois, présente l'inconvénient de réguler l'ensemble du chauffage d'un logement à partir d'une température mesurée localement. Par conséquent, l'ensemble des besoins énergétiques de l'habitation ne sont pas intégrés et s'il existe une source de chaleur indépendante dans la pièce où se trouve la sonde d'ambiance telle qu'une cheminée à feu de bois, on assiste à un refroidissement généralisé du reste de la maison, faute du déclenchement du thermostat.

Naturellement, il est possible de multiplier les sondes d'ambiance; toutefois, cette solution n'est généralement pas retenue en raison des frais élevés occasionnés par la mise en place du câblage correspondant.

Aujourd'hui, les techniques de régulation du chauffage se sont orientées vers une prise en considération de la température extérieure. Pour cela, il est également nécessaire de déterminer la pente de l'installation. Celle-ci se définit comme étant le rapport de la différence de température entre la température maximum des radiateurs et la température ambiante sur l'écart moyen de température, l'écart moyen étant la différence entre la température moyenne amont et aval de la chaudière diminuée de la température ambiante.

Dans ces conditions, la pente peut également se définir comme étant le coefficient multiplicateur à appliquer sur la variation de température extérieure pour obtenir la variation de température du fluide caloporteur en départ de chaudière à adopter afin de compenser les déperditions énergétiques correspondantes.

Une installation disposant d'une pente faible est préférable afin de limiter les pertes au niveau des tuyauteries.

Pour appliquer ce principe de régulation, il est nécessaire de disposer d'un matériel relativement important, qui comprend notamment une sonde extérieure, une sonde placée en départ de chaudière et un régulateur; en outre, le câblage correspondant doit être posé, par conséquent, il s'agit d'une régulation coûteuse.

Le fonctionnement d'un tel type d'installation est satisfaisant dans la mesure où aucune source calorifique auxiliaire ne vient perturber le modèle théorique. En particulier, une cheminée à feu de bois, des appareils électroménagers, une gazinière voire même une réception de plusieurs personnes constituent autant d'impondérables provoquant un dérèglement notable du régime de chauffe.

Le but principal de la présente invention est de proposer un procédé de régulation de température d'une installation de chauffage central qui soit à la fois très économique et très efficace notamment en intégrant l'ensemble des paramètres de chacun des locaux chauffés.

La mise en oeuvre du procédé de la présente invention est facile et ne nécessite la mise en place que d'un câblage très réduit, localisé au niveau de la chaudière. Dans ces conditions, le coût est très réduit. De plus, l'adaptation sur une installation existante peut être effectuée.

L'ensemble des facteurs énergétiques sont pris en considération et une analyse globale de la situation calorifique est effectuée pour déterminer le régime de chauffe nécessaire.

Il faut également souligner l'aspect polyvalent de la présente invention qui peut s'adapter à tous types de points de chauffage, qu'il s'agisse de convecteurs, radiateurs ou encore sols chauffants et autres.

D'autres buts et avantages de la présente invention apparaitront au cours de la description qui va suivre qui n'est cependant donnée qu'à titre indicatif et qui n'a pour but de la limiter.

Selon l'invention, le procédé de régulation de la température d'une installation de chauffage central comprenant notamment une chaudière, des canalisations pour la distribution en circuit fermé d'un fluide caloporteur à différents points de chauffage tels que radiateurs, convecteurs ou sols chauffants et une pompe de circulation du dit fluide caloporteur, est caractérisé en ce que : on contrôle les déperditions globales calorifiques du fluide caloporteur au cours de sa circulation dans l'installation, on détermine les besoins correspondants en se référant à un modèle théorique et on ajuste la température de départ du fluide caloporteur en fonction des besoins déterminés.

L'invention sera mieux comprise à la lecture de la description suivante accompagnée des dessins en annexe parmi lesquels :

- la figure 1 schématise une installation de chauffage central dotée d'un dispositif de mise en oeuvre du procédé de régulation de la présente invention,

- la figure 2 illustre un diagramme correspondant au modèle théorique de fonctionnement d'un chauffage en fonction des déperditions calorifiques mesurées.

La présente invention vise un procédé de régulation de la température d'une installation de chauffage central qui trouvera notamment son application chez les chauffagistes.

Actuellement, on distingue trois types de régulation, il s'agit de la régulation du fluide caloporteur lui-même en sortie de chaudière, de la régulation du chauffage piloté par un thermostat d'ambiance, de la régulation prenant en considération la température extérieure et la pente de l'installation de chauffage. Toutes ces régulations ne donnent pas entière satisfaction car elles ne prennent pas en considération l'ensemble des paramètres influant sur la température de l'habitation.

Par contre, selon le procédé de régulation de la présente invention, on prend en considération la totalité des paramètres susceptibles d'affecter la température des différents locaux chauffés par l'installation de chauffage central. Puisqu'il s'agit d'une installation de chauffage central, bien entendu, il est pris en considération le besoin global.

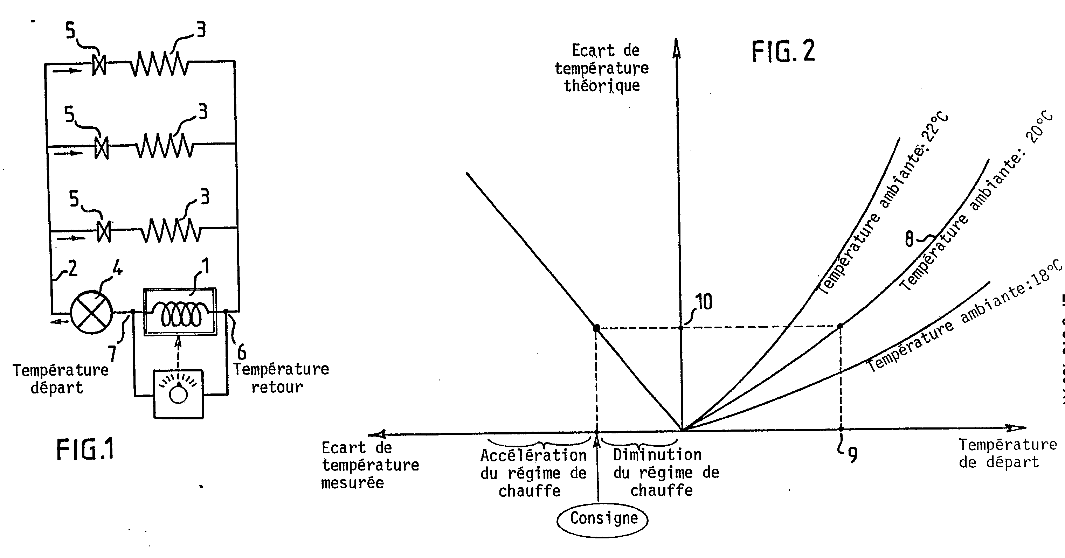

La figure 1 schématise une installation de chauffage central qui comprend notamment une chaudière 1 dont la source d'énergie est quelconque, des canalisations 2 qui assurent la distribution en circuit fermé d'un fluide caloporteur à différents points 3 de chauffage tels que radiateurs, convecteurs ou sols chauffants. La circulation du fluide caloporteur est assurée par une pompe de circulation 4.

Des vannes 5 permettent d'ajuster le débit dans les différentes branches de la canalisation 2 pour adapter la température de chacun des points de chauffage 3 aux besoins des locaux correspondants.

Selon la caractéristique principale de la présente invention, on contrôle les déperditions globales calorifiques du fluide caloporteur au cours de sa circulation dans l'installation de chauffage, on détermine les besoins correspondants en se référant à un modèle théorique et on ajuste la température du fluide au départ de la chaudière en fonction des besoins déterminés.

En effet, il existe une relation étroite entre les déperditions calorifiques et la température ambiante dans chacune des pièces chauffées par l'installation, étant entendu que le fluide caloporteur se refroidira d'autant moins que la température ambiante dans les différentes pièces est élevée. C'est sur ce constat que l'on détermine le régime de chauffe approprié de la chaudière pour stabiliser la température ambiante dans les différents locaux chauffés par l'installation.

Le modèle théorique qui permet de déterminer les besoins énergétiques fait l'object d'une étude qui peut être entreprise soit lors de la mise en route du dispositif de régulation, soit industriellement au cours de la fabrication du dispositif de régulation.

Dans la pratique, ce procédé de régulation est simple à mettre en oeuvre puisqu'il ne nécessite la mise en place que de deux sondes de température, l'une 6 placée en amont de la chaudière 1 et l'autre 7 placée en aval de la chaudière 1.

Selon le procédé de régulation, on mesure la température des fluides caloporteurs au départ de la chaudière 1, puis on mesure la température du fluide caloporteur au retour de la chaudière 1. Ces deux relevés permettent de déterminer l'écart entre les deux températures, cette valeur étant directement liée avec les déperditions calorifiques du fluide subies au cours de sa circulation dans l'installation.

Ensuite, on compare cet écart de température calculé par rapport à un écart idéal fonction de la température du fluide caloporteur au départ de la chaudière 1, ce qui permet de déterminer un écart différentiel. Cet écart différentiel de température du second ordre est lui-même proportionnel à l'écart de température existant entre la température ambiante théorique et la température ambiante pratique.

Le rôle de la régulation de température est justement de faire correspondre la température ambiante pratique avec la température ambiante théorique c'est-à-dire la température souhaitée. Dans ces conditions, il faut ajuster le régime de chauffe de la chaudière, c'est-à-dire la température du fluide au départ de celle-ci pour réduire voire annuler l'écart différentiel de température. Au cas où celui-ci est nul, la température ambiante pratique est égale à la température ambiante théorique, c'est-à-dire que l'objectif est atteint.

Pour le bon fonctionnement du procédé, il est nécessaire de faire intervenir certaines pondérations, en particulier les valeurs instantanées des températures peuvent être sensiblement différentes des valeurs moyennes. Or, la régulation de la présente invention se veut globale, il est donc souhaitable d'effectuer une mesure de la température moyenne du fluide caloporteur au départ et au retour de la chaudière 1.

L'ensemble des facteurs intervenant dans le décompte des déperditions calorifiques seront intégrés en mesurant au départ de la chaudière la température moyenne d'une quantité de fluide correspondant à celle contenue dans les canalisations 2 et dans les points 3 de chauffage et également en mesurant au retour la température moyenne de la même quantité de fluide.

La précision du relevé de température pourra même être accrue si on mesure la température moyenne du même volume de fluide au retour de la chaudière avec un temps de retard par rapport à la mesure de la température au départ de la chaudière 1, correspondant au temps de circulation du dit volume de fluide dans l'installation. En effet, dans ces conditions, la quantité de fluide étalon prise pour analyser les déperditions correspond très exactement à celle de l'ensemble de l'installation et de plus, il s'agit du même volume de fluide qui est adopté pour déterminer les températures moyennes en amont et en aval de la chaudière.

D'une installation à l'autre, la quantité de fluide caloporteur mise en jeu varie dans des proportions importantes; aussi, il est nécessaire de déterminer dans chaque circonstance le temps de retard adopté pour la mesure de la température moyenne au retour de la chaudière, le débit de la pompe ayant également une incidence.

Selon le procédé de la présente invention, pour déterminer le temps de circulation du fluide caloporteur dans l'installation, on mesure l'intervalle de temps nécessaire pour enregistrer une élévation de la température au retour de la chaudière après sa mise en marche.

On peut en effet considérer qu'au démarrage, la chaudière 1 injecte dans les canalisations, par l'intermédiaire de la pompe 4, un fluide chaud qui se distingue du fluide stagnant précédemment qui était tiède ou froid. Aussi, lorsque l'on enregistre par l'intermédiaire de la sonde 6 au retour de la chaudière 1 une brusque élévation de température, il s'agit du fluide caloporteur chaud injecté et le temps mesuré correspond bien au temps minimum de parcours de l'installation.

Pour mesurer la température moyenne de la quantité de fluide précité, c'est-à-dire celle correspondant au volume de l'installation, plusieurs techniques peuvent être mises en jeu, en particulier, on peut utiliser un intégrateur qui offre l'avantage d'être très précis et de donner une valeur moyenne exacte.

Cependant, il s'agit d'un dispositif relativement coûteux et des expériences ont montré qu'en réalisant la simple moyenne arithmétique de la température instantanée mesurée en début et en fin de temps nécessaire au fluide pour effectuer le parcours de l'installation, le chiffre obtenu était tout à fait satisfaisant. Aussi, il s'agit de la solution préconisée par la présente invention.

Une attention particulière doit être portée lors du démarrage de l'installation. En effet, il s'agit d'un régime transitoire durant lequel les déperditions ne sont pas stabilisées mais évoluent de sorte que le fonctionnement de la régulation ne peut, durant cette phase, être conforme à un modèle théorique.

Durant la phase de démarrage de l'installation, pendant un certain temps, on temporise la régulation et on ajuste le régime de chauffe de la chaudière de sorte à obtenir un écart prédéterminé de température entre la température du fluide caloporteur au départ et celle au retour de la chaudière. En adoptant par exemple un écart de 45 °C, on se place dans des conditions favorables pour la régulation ultérieure.

La figure 2 schématise le diagramme de fonctionnement du procédé de régulation de la présente invention. A l'aide des sondes amont 6 et aval 7 de la chaudière 1, on connait avec précision les températures du fluide caloporteur à l'entrée et à la sortie de la chaudière.

L'utilisateur devra également indiquer la température ambiante souhaitée, c'est pourquoi, le diagramme de la figure 2 comprend dans le premier quadrant, plusieurs courbes correspondant chacune à une température ambiante souhaitée. Dans l'exemple choisi, une température ambiante de 20 °C est demandée aussi la courbe correspondante 8 est retenue.

La température du fluide caloporteur au départ de la chaudière 1 est mesurée à l'aide de la sonde 7 ce qui correspond au point 9 sur le diagramme de la figure 2. A cette température de départ du fluide caloporteur 9 correspond, d'après le fonctionnement théorique pour une température ambiante de 20 °C, un écart de température théorique 10 entre la température du fluide caloporteur au départ et au retour de la chaudière 1.

Cet écart de température théorique 10 fait office de valeur de consigne pour le fonctionnement de la régulation. On compare en effet l'écart de température mesurée à l'aide des sondes 6 et 7 avec l'écart théorique 10.

Si l'écart de température mesurée est plus important que l'écart théorique, c'est que les déperditions calorifiques sont plus importantes que la normale en raison d'une température ambiante faible ; par conséquent plus de calories sont absorbées et il y a lieu d'accélérer le régime de chauffe de la chaudière pour combler le déficit.

Par contre, si l'écart de température mesurée est inférieur à l'écart de température théorique calculée, c'est que les déperditions sont moins importantes que prévues en raison d'une température ambiante élevée et il convient, dans ce cas, de diminuer le régime de chauffe de la chaudière.

Il faut noter que, sur le plan pratique, les courbes théoriques de correspondance entre température de départ de la chaudière et écart de température théorique qui correspondent chacune à une température ambiante donnée, sont mémorisées dans le dispositif dans le dispositif de régulation.

Dans l'exemple donné, nous n'avons pas fait intervenir les types de points de chauffage 3 mis en place dans l'installation. Cependant, ils ont une influence sur la forme des courbes de température ambiante 8 et le dispositif de régulation disposera en mémoire des différentes courbes correspondant à la nature des points de chauffage rencontrés, qu'il s'agisse de convecteurs, radiateurs ou planchers chauffants.

On pourra, par exemple, concevoir un ensemble de six familles de courbes standard mémorisées par le dispositif de régulation et qui seront sélectionnées par l'installateur lors de la mise en place de l'installation. Chacune des courbes correspondant à un type d'installation tel que : convecteurs haute température, radiateurs convecteurs, planchers chauffants, radiateurs 60 ° C, radiateurs 50 ° C, radiateurs 40 ° C.

D'autres mises en oeuvre de la présente invention, à la portée de l'Homme de l'Art, auraient également pu être envisagées sans pour autant sortir du cadre de celle-ci.

**Revendications**

1. Procédé de régulation de la température d'une installation de chauffage central comprenant notamment une chaudière (1), des canalisations (2) pour la distribution en circuit fermé d'un fluide caloporteur à différents points de chauffage (3), tels que radiateurs, convecteurs, ou planchers chauffants, et une pompe (4) de circulation du dit fluide caloporteur, procédé dans lequel on contrôle les déperditions calorifiques globales du fluide caloporteur au cours de sa circulation dans l'installation, caractérisé en ce que l'on détermine les besoins correspondant en se référant à un modèle théorique, et on ajuste la température du fluide au départ de la chaudière (1) en fonction des besoins déterminés.

2. Procédé de régulation selon la revendication 1, caractérisé en ce que :
- on mesure la température du fluide au départ de la chaudière (1),
- on mesure la température du fluide au retour de la chaudière (1),
- on compare ces deux températures ou une valeur dérivée de ces températures à des températures théoriques.

3. Procédé de régulation selon la revendication 2, caractérisé en ce que l'on compare les dites températures relevées ou une valeur dérivée de ces températures à une courbe théorique.

4. Procédé de régulation selon la revendication 2, caractérisé en ce que :
- on calcule l'écart entre les dites deux températures précédemment relevées,
- on compare l'écart de température relevé par rapport à un écart idéal fonction de la température de départ, ce qui détermine un écart différentiel de température,
- on ajuste le régime de chauffe de la chaudière (1) soit la température de départ du fluide caloporteur pour réduire l'écart différentiel.

5. Procédé de régulation selon la revendication 4, caractérisé en ce que l'on mesure la température moyenne du fluide caloporteur au départ et ou retour de la chaudière (1).

6. Procédé de régulation selon la revendication 5, caractérisé en ce que l'on mesure au départ de la chaudière (1) la température moyenne d'une quantité de fluide correspondant à celle contenue dans les canalisations (2) et dans les points de chauffage (3) et que l'on mesure au retour la température moyenne de la même quantité de fluide caloporteur.

7. Procédé de régulation selon la revendication 6, caractérisé en ce que l'on mesure la température moyenne du même volume de fluide au retour de la chaudière (1) avec un temps de retard par rapport à la mesure de la température au départ de la chaudière (1) correspondant au temps de circulation du dit volume de fluide dans l'installation.

8. Procédé de régulation selon la revendication 7, caractérisé en ce que l'on détermine le temps de circulation du fluide dans l'installation en mesurant l'intervalle de temps nécessaire pour enregistrer une élévation de température au retour de la chaudière après sa mise en marche.

9. Procédé de régulation selon la revendication 7, caractérisé en ce que l'on calcule la température moyenne en mesurant la température instantanée en début et fin du temps de circulation du fluide dans l'installation et en faisant la moyenne arithmétique.

10. Procédé de régulation selon la revendication 4, caractérisé en ce que, au démarrage de l'installation, on temporise pendant un certain temps la régulation et on ajuste le régime de chauffe pour obtenir un écart prédéterminé de température entre celle au départ et au retour de la chaudière (1).

11. Procédé de régulation selon la revendication 1, caractérisé en ce que, en fonction de la température ambiante souhaitée, on sélectionne la courbe idéale (8) d'écart de température à utiliser à titre de référence.

12. Procédé de régulation selon la revendication 1, caractérisé en ce que l'on mémorise des familles de courbes idéales d'écart de température et que l'on détermine celle à utiliser en fonction du type d'installation : convecteurs, sols chauffants, radiateurs.

EP 0 316 496 A1

FIG.1

5  3
5  3
5  3

2  4  1

Température
départ

7

6  Température
retour

FIG.2

Ecart de
température
théorique

Température ambiante: 22°C
Température ambiante: 20°C
Température ambiante:18°C

8

10

9

Ecart de
température
mesurée

Accélération
du régime de
chauffe

Diminution
du régime de
chauffe

Consigne

Température
de départ

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 542 852  (COMPAGNIE GENERALE D'ELECTRICITE) <br> * Page 2, ligne 23 - page 7, ligne 15; résumé; figures 1,2 * | 1,2 | G 05 D   23/19 <br> F 24 D   19/10 |
| A |  | 3,4,9-12 | |
| | --- | | |
| X | FR-A-2 470 933  (F. SALZMANN) <br> * Page 2, ligne 33 - page 7, ligne 8; revendication 5; figure 1 * | 1,2 | |
| A | | 7,8 | |
| | --- | | |
| A | GB-A-2 068 601  (LANDIS& GYR AG) <br> * Page 1, ligne 45 - page 2, ligne 37; résumé; figures * | 1-5 | |
| | --- | | |
| A | EP-A-0 192 225  (HAPPEL GmbH) <br> * Revendications 1-19; résumé; figure 1 * | 1-6 | |
| | ----- | | |

**DOMAINES TECHNIQUES RECHERCHES (Int. Cl.4)**

G 05 D
F 24 D

Le présent rapport a été établi pour toutes les revendications

| Lieu de la recherche | Date d'achèvement de la recherche | Examinateur |
|---|---|---|
| LA HAYE | 12-07-1988 | FOURRICHON,P.M.L. |